# EUROPÄISCHE PATENTSCHRIFT

(11) **EP 0 416 640 B1**
(45) Veröffentlichungstag und Bekanntmachung des Hinweises auf die Patenterteilung: **27.11.1996**
(21) Anmeldenummer: 90117241.1
(22) Anmeldetag: 07.09.1990
(51) Int. Cl.: C03B 37/15, G02B 6/28

(54) **Verfahren zur Herstellung eines optischen Verschmelzkopplers und danach hergestellter Koppler**
Method of fabrication of a fused optical coupler and coupler manufactured accordingly
Méthode de fabrication d'un coupleur optique fusionné et coupleur ainsi fabriqué

(30) Priorität: 08.09.1989 DE 3930035
(43) Veröffentlichungstag der Anmeldung: 13.03.1991
(73) Patentinhaber: Alcatel SEL Aktiengesellschaft, D-70435 Stuttgart (DE); ALCATEL N.V., NL-1077 XX Amsterdam (NL)
(72) Erfinder: Rossberg, Rolf, D-7141 Schwieberdingen (DE)
(74) Vertreter: Pohl, Herbert, Dipl.-Ing

(56) Entgegenhaltungen:
- EP-A- 246 737
- US-A- 4 360 248
- US-A- 4 834 481
- ELECTRONICS LETTERS. Bd. 21, Nr. 10, 9. Mai 1985, STEVENAGE GB Seiten 415 - 416; I. YOKOHAMA ET AL.: 'FIBRE-OPTIC POLARISING BEAM SPLITTER EMPLOYING BIREFRINGENT-FIBRE COUPLER'
- JOURNAL OF LIGHTWAVE TECHNOLOGY. Bd. LT-5, Nr. 5, Juli 1987, NEW YORK US Seiten 910 - 915; I. YOKOHAMA ET AL.: 'Fiber-Coupler Fabrication with Automatic Fusion-Elongation Process for Low Excess Loss and High Coupling-Ratio Accuracy'
- ELECTRONICS LETTERS. Bd. 20, Nr. 6, 15. Maerz 1984, STEVENAGE GB Seiten 230 - 232; T. BRICHENO UND A. FIELDING: 'STABLE LOW-LOSS SINGLE-MODE COUPLERS'
- IEE PROCEEDINGS H. MICROWAVES, ANTENNAS & PROPAGATION. Bd. 131, Nr. 4, August 1984, STEVENAGE GB Seiten 221 - 228; F. DE FORNEL ET AL.: 'Analysis of single-mode fused tapered fibre couplers'

## Beschreibung

Die Erfindung betrifft ein Verfahren zur Herstellung eines optischen Verschmelzkopplers nach dem Oberbegriff des Anspruchs 1. Derartige Koppler werden in Systemen der optischen Nachrichtentechnik verwendet.

In der Druckschrift "ELEKTRONICS LETTERS vom 14.03.1985, Band 21, Nr. 6, Seiten 249 bis 251" wird von M.S. Yataki, D.N. Payne und M.P. Varnham unter dem Titel "ALL-FIBRE POLARISING BEAMSPLITTER" ein polarisationsselektiver optischer Verschmelzkoppler beschrieben, der aus nicht doppelbrechenden Einmodenfasern mit matched cladding hergestellt wurde. Dabei hat sich gezeigt, daß Verschmelzkoppler mit solchen Einmodenfasern zur Erzielung der polarisationselektiven Eigenschaft sehr lang ausgezogen werden müssen, etwa 10 cm bis 30 cm. Die Fasern werden dabei sehr dünn, sind deshalb empfindlich und schwierig handhabbar. Außerdem ist ein derartiger Verschmelzkoppler wegen der bei dieser Länge stattfindenden hohen Anzahl von Überkopplungen stark wellenlängenselektiv, wodurch die Herstellung für eine bestimmte Wellenlänge erschwert wird, weil die Laser dann ausgesucht und gegebenenfalls noch in der Wellenlänge stabilisiert werden müssen.

Aus der Druckschrift "ELECTRONICS LETTERS vom 09.05.1985, Band 21, Nr. 10, Seiten 415 und 416" ist dem Artikel "FIBRE-OPTIC POLARISING BEAM SPLITTER EMPLOYING BIREFRINGENT-FIBRE COUPLER" von I. Yokohama, K. Okamoto und J. Noda entnehmbar, daß bei Verwendung von polarisationserhaltenden Fasern polarisationsselektive Verschmelzkoppler mit wesentlich kürzerer Ziehlänge herstellbar sind. Hierfür können jedoch nur spezielle, nicht handelsübliche Fasertypen, wie z.B. mit im Brechungsindex angepaßten spannungserzeugenden Elementen (SAP, stress-applying parts) verwendet werden, die aber nur schwer erhältlich und sehr teuer sind.

Der Erfindung liegt die Aufgabe zugrunde, ein Verfahren zur Herstellung eines polarisationsselektiven optischen Verschmelzkopplers mit kurzer Ziehlänge und einen danach herstellten Schmelzkoppler anzugeben, der aus nicht doppelbrechenden Einmodenfasern mit matched cladding besteht und der einfacher sowie kostengünstiger herstellbar ist als die vergleichbaren bekannten Verschmelzkoppler. Diese Aufgabe wird erfindungsgemäß durch die im Anspruch 1 angegebenen Merkmale gelöst. Vorteilhafte Verfahrensschritte und Ausbildungen des Verschmelzkopplers sind den Unteransprüchen zu entnehmen.

Die gefundene Lösung hat unter anderem den Vorteil, daß der Verschmelzbereich des Kopplers nur eine kurze Zieh länge hat. Daher ist er handlich und bereits vor der schützenden Einbettung in ein Gehäuse gegen Beschädigungen relativ unempfindlich. Außerdem ist die Herstellung einfacher, wodurch eine Zeit- und Kostenersparnis erzielt wird. Weitere Vorteile sind in der Beschreibung genannt.

Die Erfindung wird anhand eines in einer Zeichnung dargestellten Ausführungsbeispieles wie folgt näher beschrieben. Es zeigen:
- Fig. 1: zwei parallel nebeneinander liegende polarisationserhaltende Faserenden, die mit je einem Faserende von zwei nicht doppelbrechenden Einmodenfasern verspleißt sind, vor der Herstellung des Verschmelzkopplers;
- Fig. 2: die Fasern der Fig. 1, während der Herstellung des Verschmelzkopplers;
- Fig. 3: die Fasern der Fig. 2, nach der Herstellung des Verschmelzkopplers;
- Fig. 4a bis Fig. 4b: mehrere Querschnittskonfigurationen des Verschmelzbereiches verschiedener Koppler.

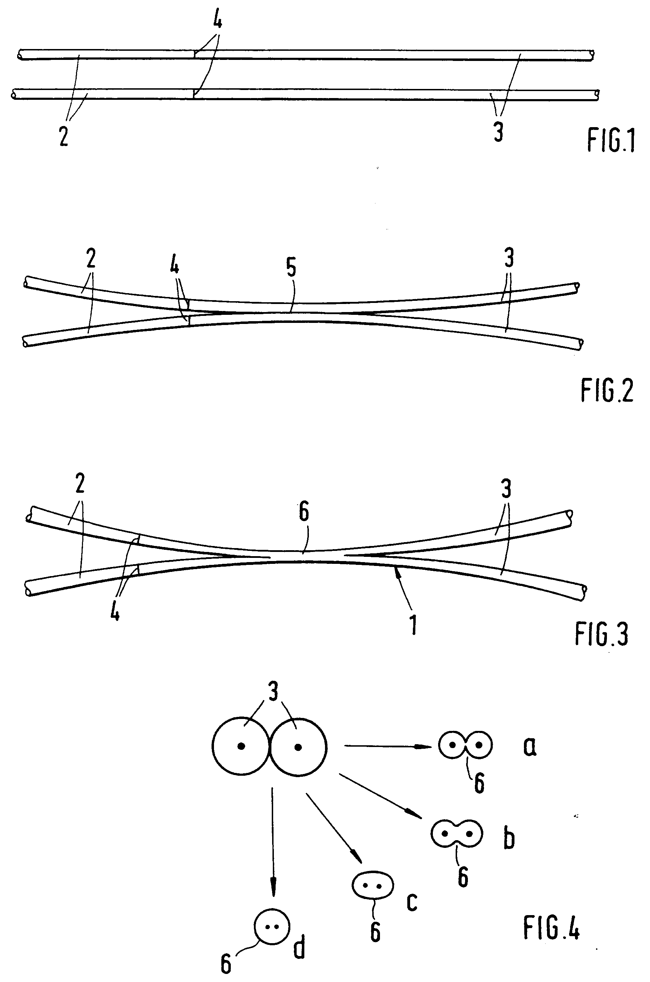

In Fig. 1 sind die Eingangsfasern des herzustellenden Verschmelzkopplers 1 im folgenden kurz Koppler genannt mit 2 bezeichnet. Es handelt sich um polarisationserhaltende Einmodenfasern, deren Enden mit je einem Ende einer normalen, nicht doppelbrechenden Einmodenfaser vom Typ matched cladding durch Spleißen verbunden sind. Bei den Spleißen handelt es sich vorzugsweise um Verbindungen, die in bekannter Weise durch stoffschlüssiges Verschmelzen der Faserenden hergestellt werden. Die nicht doppelbrechenden Einmodenfasern bilden nach der Herstellung des Kopplers 1 die Ausgangsfasern 3, welche zugleich die Anschlußfasern darstellen. Nach Herstellung der Spleißverbindungen 4 wird das Faserpaar so in einer Ziehvorrichtung (nicht dargestellt) fixiert, daß die optischen Hauptachsen der polarisationserhaltenden Einmodenfasern (Eingangsfasern 2) parallel und senkrecht zur Kopplerachse liegen und die nicht doppelbrechenden Einmodenfasern (Ausgangsfasern 3) in einem Bereich, der einen relativ kurzen Abstand zu den Spleißverbindungen 4 hat parallel aneinanderliegen, wobei die Fasern im Querschnitt unverändert sind. Anschließend wird in eine der Eingangsfasern 2 Licht eingekoppelt und am Ende beider Ausgangsfasern 3 detektiert. Danach werden die nicht doppelbrechenden Einmodenfasern an der Berührungsstelle 5 (Fig. 2) miteinander verschmolzen und der Koppler 1 gleichzeitig in axialer Richtung ausgezogen, wobei die Fasern bikonisch getapert werden. Dabei erfolgt das Überkoppeln des Lichtes schon bei kurzen Ziehlängen. Um eine hohe Trennung der Polarisationsrichtungen zu erhalten, genügt bereits eine Ziehlänge von 10 mm bis 15 mm. Vorzugsweise beträgt die Ziehlänge ca. 11 mm bis 13 mm. Die Ziehlänge ist damit in vorteilhafter Weise nur unwesentlich länger als die von wellenlängenselektiven Schmelzkopplern.

Fig. 3 zeigt den fertig ausgezogenen Koppler 1 mit dem erstarrten Verschmelzbereich 6, der aus den miteinander verschmolzenen Teilstücken der Ausgangsfasern 3 besteht und der die optischen Eigenschaften des Kopplers bestimmt. Je nach den gewünschten Eigenschaften wird vom Ausgangsquerschnitt der Einmodenfasern gemäß Fig. 4 her ein Schmelzbereich 6 geschaffen, der entsprechend
- Fig. 4a: einen geringen Verschmelzungsgrad aufweist, bei dem die Mantelflächen der nicht doppelbrechenden Einmodenfasern nur linienförmig miteinander verbunden sind;
- Fig. 4b: einen mittleren Verschmelzungsgrad aufweist, bei dem die Mantelflächen zwischen den nicht doppelbrechenden Einmodenfasern nur noch eine geringe Einschnürung haben;
- Fig. 4c: einen hohen Verschmelzungsgrad mit elliptischem Querschnitt aufweist;
- Fig. 4d: einen extremen Verschmelzungsgrad mit annähernd kreisrundem Querschnitt aufweist.

Der vorzugsweise mit einem mittleren Verschmelzungsgrad hergestellte Koppler 1 (Fig. 4b) zeigt für linear polarisiertes Licht (senkrecht oder parallel zur Kopplerebene) die Wellenlängenabhängigkeit eines wellenlängenselektiven Verschmelzkopplers. In der Wellenlängenabhängigkeit der beiden Polarisationsrichtungen besteht eine Phasenverschiebung von 180°. Die Übersprechdämpfung zwischen den beiden Polarisationsrichtungen (senkrecht und parallel zur Kopplerebene) beträgt in einem relativ großen nutzbaren Wellenlängenbereich ca. 19 dB bis 25 dB, während der Polarisationsgrad in den abgehenden Fasern (Ausgangsfasern 3) ebenfalls sehr hoch ist und Extinktionswerte von ca. 25 dB bis 30 dB erreicht. Dieser Koppler 1 mit nicht doppelbrechenden Einmodenfasern vereinigt somit die Eigenschaften von zwei Kopplern, wie sie in der DE-OS 37 16 247.0 von K. Fußgänger für ein Übertragungssystem mit Wellenlängen- und Polarisations-Multiplex vorgeschlagen worden sind.

Der Wellenlängenabstand benachbarter Kanäle beträgt bei dem Koppler 1 etwa 50 nm. Am 3dB-Punkt, bei dem in beiden Kanälen gleich viel Licht vorhanden ist, zeigt der Koppler 1 keine Polarisationsselektivität. 25 nm weiter, bei größerer oder kleinerer Wellenlänge, ist maximale Polariationsselektivität vorhanden. Dies wird dazu benutzt, um den polarisationsselektiven Koppler 1 zu optimieren. Wird der Koppler 1 z.B. bei einer Wellenlänge von 1530 nm benötigt, dann wird linear polarisiertes Licht von der Wellenlänge 1505 nm in eine Eingangsfaser 2 eingekoppelt. Durch Zufuhr von Wärme wird der Schmelzvorgang eingeleitet. Beim Verschmelzvorgang koppelt das Licht während des Ziehens zur anderen Faser über, dann wieder zurück, usw., wobei mit zunehmender Ziehlänge das Licht immer weniger vollständig überkoppelt. Der Ziehprozeß wird dann gestoppt, wenn das wechselseitige Überkoppeln stagniert und damit in beiden Kanälen gleichviel Licht vorhanden ist. Die Licht- und Wärmequellen werden den abgeschaltet, der Koppler 1 mit den Anschlußfasern aus der Ziehvorrichtung genommen und anschließend in einem Gehäuse mechanisch geschützt befestigt. Dies geschieht vorzugsweise so, daß die vom Verschmelzbereich 6 zu einer Anschlußfaser führenden Fasern unter Einschluß der Spleißverbindungen 4 krümmungsfrei im Kopplergehäuse liegen und darin festgelegt sind. Auf diese Weise sind die Anschlußfasern (Eingangs-/Ausgangsfasern 2, 3) zugentlastet gehalten.

Der so angefertigte polarisationsselektive Koppler 1 hat sehr gute Eigenschaften. Außer einer relativ kurzen Baulänge zeichnet er sich durch sehr geringe Einfügeverluste aus, die weniger als 0,5 dB betragen. Er kann verwendet werden, um zwei Laser gleicher Wellenlänge an eine Faser anzukoppeln ("Laserredundanz", z.B. bei Unterwasserverstärkern) . Dazu wird das polarisierte Licht des einen Lasers parallel, das des anderen senkrecht zur Kopplerebene eingekoppelt. In diesem Fall erfolgt im Koppler eine Zusammenführung des Laserlichtes auf eine Standard-Einmodenfaser. Um dies zu gewährleisten, werden zwischen Laser und Koppler 1 die polarisationserhaltenden Fasern (Eingangsfasern 2) verwendet. Andernfalls wären Intensitätsschwankungen vorhanden, die zu einem Rauschen führen würden ("Polarisationsrauschen"). Die Aufteilung des ankommenden Laserlichtes in zueinander senkrechte Komponenten gestattet es, den Koppler für den Polarisationsdiversity-Empfang zu benutzen.

Bei verschiedener Wellenlänge und unterschiedlicher Polarisation wird im Koppler 1 sowohl die Wellenlänge als auch die Polarisation aufgeteilt, wodurch eine hohe Fernnebensprechdämpfung gewährleistet wird.

## Patentansprüche

1. Verfahren zur Herstellung eines polarisationsselektiven optischen Verschmelzkopplers (1), der mehrere Eingangsfasern (2) sowie Ausgangsfasern (3) hat und in der Koppelregion aus zwei parallel verlaufenden, nicht doppelbrechenden Einmodenfasern mit matched cladding besteht, die unter Einwirkung von Wärme miteinander verschmolzen werden und deren dabei gebildeter Verschmelzbereich (6) in axialer Richtung bis zum Abschalten der Wärmequelle ausgezogen wird,
**dadurch gekennzeichnet,** daß zuerst aus polarisationserhaltenden Fasern bestehende Eingangsfasern (2) mit Ausgangsfasern (3) gespleißt werden, die aus nicht doppelbrechenden Einmodenfasern mit matched cladding bestehen, daß dann linear polarisiertes Licht mit einer ausgewählten Wellenlänge in eine der Eingangsfasern (2) eingespeist und an den Enden von zwei Ausgangsfasern (3) detektiert wird, daß die Ausgangsfasern (3) danach miteinander verschmolzen werden und der Koppler (1) dabei soweit ausgezogen wird, bis das wechselseitige Überkoppeln zwischen den beiden Ausgangsfasern (3) stagniert und daß dann die Wärmequelle abgeschaltet wird.

2. Nach dem Verfahren gemäß Anspruch 1 hergestellter polarisationsselektiver optischer Verschmelzkoppler, der mehrere polarisationserhaltende Eingangsfasern sowie nicht doppelbrechende Einmodenfasern mit matched cladding als Ausgangsfasern hat die miteinander verspleißt sind, wobei die Ausgangsfasern in der Koppelregion parallel verlaufen, und miteinander verschmolzen und gezogen sind und wobei die Länge des Verschmelzbereichs (1) 10 mm bis 15 mm beträgt.

3. Koppler nach Anspruch 2, wobei die polarisationserhaltenden Einmodenfasern (Eingangsfaser 2) optische Hauptachsen parallel und senkrecht zur Koppelebene ausweisen.

4. Koppler nach Anspruch 2, wobei die vom Verschmelzbereich (6) zu einer Eingangs- oder Ausgangsfaser (2, 3) führenden Fasern krümmungsfrei in einem Kopplergehäuse liegen und zusammen mit den Spleißverbindungen (4) im Kopplergehäuse fixiert sind.

5. Koppler nach Anspruch 2, wobei der Koppler für Licht bestimmter Wellenlängenbereiche polarisationsselektiv ist.

6. Koppler nach Anspruch 2, wobei der Koppler für Licht einer Polarisationsrichtung parallel oder senkrecht zur Kopplerebene wellenlängenselektiv ist.

7. Koppler nach Anspruch 2, wobei der Koppler für Licht einer Polarisationsrichtung parallel und für Licht einer Polarisationsrichtung senkrecht zur Kopplerebene nahezu die gleiche Wellenlängenabhängigkeit aufweist, und wobei zwischen den beiden Polarisationsrichtungen eine Phasenverschiebung von 180° besteht.

8. Koppler nach Anspruch 2, wobei der Koppler bei zwei verschiedenen Wellenlängen polarisations- und wellenlängenselektiv ist.

9. Koppler nach Anspruch 2 bis 8, wobei die Einmodenfasern (Ausgangsfasern 3) im Verschmelzbereich (6) einen mittleren Verschmelzungsgrad mit Mantelflächen aufweisen, die nur eine geringe Einschnürung (ähnlich Fig. 4b) haben.

## Claims

1. Process for manufacturing a polarization-selective optical fusion coupler (1), that has several input fibres (2) and output fibres (3) and in the coupling region consists of two parallel, non-birefringent monomode fibres with matched cladding, which are fused together under the action of heat and whose resulting fusion zone (6) is drawn out in the axial direction until the heat source is switched off, **characterised in that** input fibres (2) comprising polarization-maintaining fibres are first spliced to output fibres (3) which comprise non-birefringent monomode fibres with matched cladding, that linearly polarized light with a selected wavelength is then injected into one of the input fibres (2) and is detected at the ends of two output fibres (3), that the output fibres (3) are then fused together and the coupler (1) is drawn out until the mutual cross-coupling between the two output fibres (3) stagnates, and that the heat source is then switched off.

2. Polarization-selective optical fused coupler manufactured by the process according to Claim 1, which has several polarization-maintaining input fibres, as well as non-birefringent, monomode fibres with matched cladding as output fibres which are spliced together, the output fibres in the coupling region being in parallel and fused together and drawn out, and the length of the fusion zone (1) being 10 mm to 15 mm.

3. Coupler according to Claim 2, whereby polarization-maintaining monomode fibres (input fibres 2) have main optical axes parallel and perpendicular to the coupling plane.

4. Coupler according to Claim 2, whereby the fibres leading from the fusion zone (6) to an input or output fibre (2, 3) lie without curvature in a coupler housing and are fixed in the coupler housing along with the spliced connections (4).

5. Coupler according to Claim 2, whereby the coupler is polarization-selective for light of specific wavelength bands.

6. Coupler according to Claim 2, whereby the coupler is wavelength-selective for light of a polarization direction which is parallel or perpendicular to the plane of the coupler.

7. Coupler according to Claim 2, whereby the coupler has almost the same wavelength sensitivity to light of a polarization direction parallel to the plane of the coupler and to light of a polarization direction perpendicular to the plane of the coupler, a phase shift of 180° existing between the two polarization directions.

8. Coupler according to Claim 2, whereby the coupler is polarization-selective and wavelength-selective at two different wavelengths.

9. Coupler according to Claims 2 to 8, whereby in the fusion zone (6) the monomode fibres (output fibres 3) have an average degree of fusion, with lateral surfaces which have only a slight constriction (similar to Fig. 4b).

## Revendications

1. Procédé de fabrication d'un coupleur de fusion (1) optique sélectif en matière de polarisation ayant plusieurs fibres d'entrée (2) et des fibres de sortie (3) qui, dans la zone de couplage, se compose de deux fibres monomodes parallèles non biréfringentes à gaines appariées qui sous l'effet de la chaleur fusionnent ensemble et dont la zone de fusion résultante (6) est étirée dans le sens axial jusqu'à coupure de la source de chaleur, caractérisé en ce que les fibres d'entrée (2) composées de fibres entretenant la polarisation sont d'abord épissées avec des fibres de sortie (3) composées de fibres monomodes non biréfringentes à gaines appariées, en ce qu'une lumière polarisée de manière linéaire d'une longueur d'onde choisie est ensuite introduite dans une des fibres d'entrée (2) et détectée aux extrémités des deux fibres de sortie (3), en ce que les fibres de sortie (3) fusionnent ensemble et en ce que le coupleur (1) est étiré jusqu'à ce que le surcouplage réciproque entre les deux fibres de sortie (3) stagne et que la source de chaleur soit coupée.

2. Coupleur de fusion optique sélectif en matière de polarisation fabriqué selon le procédé de la revendication 1 ayant plusieurs fibres d'entrée entretenant la polarisation et des fibres de sortie sous forme de fibres monomodes non biréfringentes à gaines appariées épissées ensemble, dans lequel les fibres de sortie sont parallèles dans la zone de couplage, fusionnent ensemble et sont étirées et dans lequel la longueur de la zone de fusion est de 10 à 15 mm.

3. Coupleur selon la revendication 2 dans lequel les fibres monomodes entretenant la polarisation (fibres d'entrée 2) comportent des axes optiques principaux parallèles et perpendiculaires à la zone de couplage.

4. Coupleur selon la revendication 2 dans lequel les fibres menant de la zone de fusion (6) à une des fibres d'entrée ou de sortie (2, 3) sont placées bien à plat dans le boîtier du coupleur et sont fixées en même temps que les points d'épissure (4) dans le boîtier du coupleur.

5. Coupleur selon la revendication 2 dans lequel le coupleur est sélectif en matière de polarisation pour une lumière d'une certaine gamme d'ondes.

6. Coupleur selon la revendication 2 dans lequel le coupleur est sélectif en matière de longueur d'onde pour une lumière présentant un sens de polarisation parallèle ou perpendiculaire à la zone de couplage.

7. Coupleur selon la revendication 2 dans lequel le coupleur présente pratiquement la même dépendance vis-à-vis de la longueur d'onde pour une lumière présentant un sens de polarisation parallèle et pour une lumière présentant un sens de polarisation perpendiculaire à la zone de couplage et dans lequel un décalage de phase de 180 °C existe entre les deux sens de polarisation.

8. Coupleur selon la revendication 2 dans lequel le coupleur sélectionne la polarisation et la longueur d'onde pour deux longueurs d'onde différentes.

9. Coupleur selon la revendication 2 à 8 dans lequel les fibres monomodes (fibres de sortie 3) présentent dans la zone de fusion (6) un degré moyen de fusion des surfaces latérales n'ayant qu'un faible rétrécissement.
